# EUROPEAN PATENT SPECIFICATION

(11) **EP 4 530 043 B1**
(45) Date of publication and mention of the grant of the patent: **08.07.2026**
(21) Application number: 24202505.4
(22) Date of filing: 25.09.2024
(51) Int. Cl.: B29C 45/17, B29C 45/76, B29C 45/84

(54) **MOLDING MACHINE**
FORMMASCHINE
MACHINE DE MOULAGE

(30) Priority: 26.09.2023 JP 2023163751
(43) Date of publication of application: 02.04.2025
(73) Proprietor: Toyo Machinery & Metal Co., Ltd., Akashi-shi, Hyogo 674-0091 (JP)
(72) Inventor: TARUYA, Koji, Hyogo, 674-0091 (JP); INOUE, Makoto, Hyogo, 674-0091 (JP); INOUE, Akira, Hyogo, 674-0091 (JP); SAWADA, Yasutake, Hyogo, 674-0091 (JP)
(74) Representative: D Young & Co LLP

(56) References cited:
- JP-A- 2023 089 677
- JP-B2- 2 922 438
- JP-B2- 3 801 528
- JP-B2- 5 460 753

## Description

### BACKGROUND OF THE INVENTION

### Field of the Invention

The present invention relates to a molding machine that injects a molding material into a mold for molding a molded article.

### Description of the Related Art

There are molding machines in the past provided with a clamping device that opens and closes and clamps a mold and with an injection device that inject a molding material into a cavity in a clamped mold. Such an injection device is provided with a heating cylinder to be filled with a molding material and with a screw moving forward and backward inside the heating cylinder to inject the molding material filled in the heating cylinder.

Such a molding machine sometimes has to change any of injection conditions depending on the kind of screw inserted into the heating cylinder. Then, PTL 1 discloses a technique to determine whether the screw has been replaced based on information detected in accordance with movement of a measurement motor. Patent Literature (PTL) 1 refers to JP 2023-089677 A.

JP 2 922438 B2, JP 3 801528 B2 and JP 5 460753 B2 disclose the use of limit switches to detect if an injection unit is in a certain position or has passed such a position. JP 2 922438 B2 further discloses a rotation sensor to sense if the injection unit was turned. JP 2 922438 B2 discloses the features of the preamble of claim 1.

### SUMMARY OF THE INVENTION

However, it is difficult to consider that the method of PTL 1 allows correctly determining whether the screw has been replaced although it takes complex arithmetic operation.

The present invention has been made to solve such a problem of the techniques in the past, and it is an object thereof to provide a molding machine capable of appropriately determining by a simple method whether the screw has been replaced.

To solve the above problems, one or more embodiments of the present disclosure provide a molding machine including: an injection device configured to inject a molding material into a cavity in a clamped mold; and a control device configured to control the injection device, wherein the injection device includes a heating cylinder to be filled with the molding material and a screw to move forward and backward inside the heating cylinder and also to inject the molding material filled in the heating cylinder, and is configured to be capable of moving forward and backward to the mold between a communication orientation where a distal end of the heating cylinder communicates with the clamped mold and a separation orientation where the distal end of the heating cylinder is separated from the mold and to be capable of pivoting on a pivot shaft between the separation orientation not allowing insertion and removal of the screw and a pivot orientation allowing insertion and removal of the screw, and the molding machine further includes a sensor to detect an orientation of the injection device, and the control device determines that the screw in the heating cylinder has been replaced in accordance with detection by the sensor that the injection device pivots from the separation orientation to the pivot orientation and again returns to the separation orientation.

The present invention allows appropriate determination by a simple method of whether a screw has been replaced.

### BRIEF DESCRIPTION OF THE DRAWINGS

FIG. 1 is a side view of an injection molding machine according to an embodiment of the present disclosure.
FIGs. 2A through 2C are diagrams illustrating orientations of the injection device.
FIG. 3 is a hardware block diagram of the injection molding machine.
FIGs. 4A through 4C illustrate data examples of a mounted screw (4A), injection conditions (4B), and a screw table (4C).
FIG. 5 is an example of a screw detail screen.
FIG. 6 is an example of an injection condition setting screen.
FIG. 7 is a flowchart of an injection control process.
FIG. 8 is a display example of a screw setting screen.
FIG. 9 is another example of the screw detail screen.
FIG. 10 is another example of the injection condition setting screen.

### DETAILED DESCRIPTION OF THE INVENTION

A description is given below to an injection molding machine 10 according to the present invention based on the drawings. The injection molding machine 10 is a device that injects a measured molding material into a mold for molding an injection molded article (hereinafter, referred to as "injection molding").

### Configuration of Injection Molding Machine 10

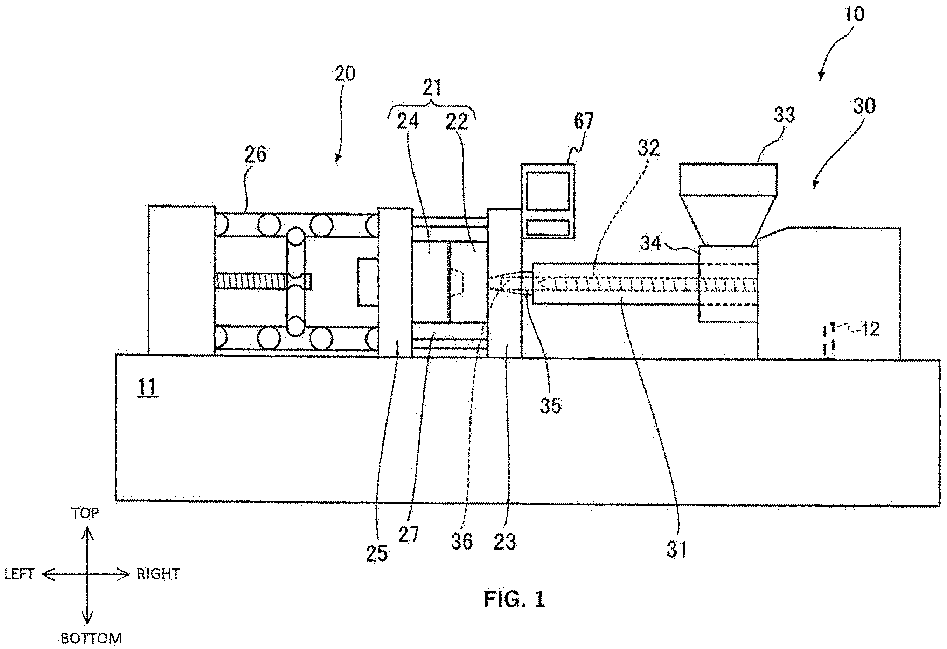

FIG. 1 is a side view of the injection molding machine 10 according to the present embodiment. As illustrated in FIG. 1, the injection molding machine 10 is mainly provided with a clamping device 20 and an injection device 30. The injection molding machine 10 is also provided with a base member 11 supporting the clamping device 20 and the injection device 30 at positions separated in a left-right direction.

The clamping device 20 performs opening and closing and clamping of a mold 21. Specifically, the clamping device 20 is mainly provided with a fixed die plate 23 supporting a fixed-side mold 22 and a movable die plate 25 supporting a movable-side mold 24. The fixed-side mold 22 and the movable-side mold 24 are supported to face each other in the left-right direction (horizontal direction) of the injection molding machine 10.

The movable die plate 25 moves in the left-right direction along a tie bar 27 by transmission of a driving force of a mold open-close motor 28 through a toggle link mechanism 26. When the movable die plate 25 moves in the left direction, the movable-side mold 24 is separated from the fixed-side mold 22. Meanwhile, when the movable die plate 25 moves in the right direction, the movable-side mold 24 abuts on the fixed-side mold 22 to form a cavity (internal space) inside the mold 21. Then, when further adding a pressure in the direction of moving the movable die plate 25 in the right direction, the fixed-side mold 22 and the movable-side mold 24 are clamped.

The injection device 30 plasticizes and measures a molding material for injection. The injection device 30 according to the present embodiment is arranged facing the clamping device 20 in the horizontal direction (right of the clamping device 20). The injection device 30 is mainly provided with a heating cylinder 31, a screw 32, a hopper 33, and a hopper block 34.

The heating cylinder 31 is a cylindrical member extending in the left-right direction of the injection molding machine 10. The heating cylinder 31 is mainly provided with a resin passage 35 and a nozzle 36. In addition, the heating cylinder 31 has an outer circumferential surface to which a band heater (not shown) is attached to heat the heating cylinder 31.

The resin passage 35 is a columnar space extending in the axial direction (longitudinal direction) inside the heating cylinder 31. The resin passage 35 communicates with the outside (cavity in the mold 21) of the heating cylinder 31 through the nozzle 36 provided at a distal end (front end) of the heating cylinder 31. In other words, the resin passage 35 is a space extending from the nozzle 36 along the axial direction.

The screw 32 is a columnar member. The screw 32 has an outer circumferential surface provided with a spiral groove. The screw 32 is stored in an internal space of the heating cylinder 31 in a state that allows the injection molding machine 10 to move in the left-right direction (hereinafter, referred to as "move forward and backward") and to rotate. The screw 32 moves forward and backward by transmission of a driving force of an injection motor 37 and rotates by transmission of a driving force of a measurement motor 38.

More specifically, when the injection motor 37 is normally rotated, the screw 32 moves toward the distal end (i.e., the nozzle 36) of the heating cylinder 31 (moves forward). Meanwhile, when the injection motor 37 is counter-rotated, the screw 32 moves toward the basal end (i.e., opposite side to the nozzle 36) of the heating cylinder 31 (moves backward).

In the description below, within a region that can be reached by the distal end of the screw 32 in the heating cylinder 31, the position closest to the nozzle 36 is referred to as a "forward limit" and the position farthest from the nozzle 36 is referred to as a "backward limit." In addition, the terms "normal rotation" and "counter-rotation" of the injection motor 37 do not specify absolute rotation directions and merely specify relative relationship (i.e., normal rotation and counter-rotation are rotation in opposite directions).

The hopper 33 is a funnel-shaped member to retain the molding material as a raw material. The hopper block 34 is a member supporting the heating cylinder 31 and the hopper 33. The hopper 33 communicates with the resin passage 35 on the basal end side, rather than the distal end, of the heating cylinder 31 through the hopper block 34. The molding material retained in the hopper 33 is supplied to the resin passage 35 of the heating cylinder 31 through an opening provided at a lower end. The molding material used for the injection molding machine 10 is, for example, so-called "pellets" molded in a columnar shape.

The injection device 30 causes the injection motor 37 to counter-rotate and causes the measurement motor 38 to rotate, thereby causing the screw 32 to move backward while rotating. The pellets supplied through the hopper 33 are thus filled (measured) in the resin passage 35 in front of the screw 32 while being plasticized. In addition, the injection device 30 causes the injection motor 37 to normally rotate, thereby causing the screw 32 to move forward. The plasticized resin in front of the screw 32 is thus injected into the cavity in the mold 21 through the nozzle 36.

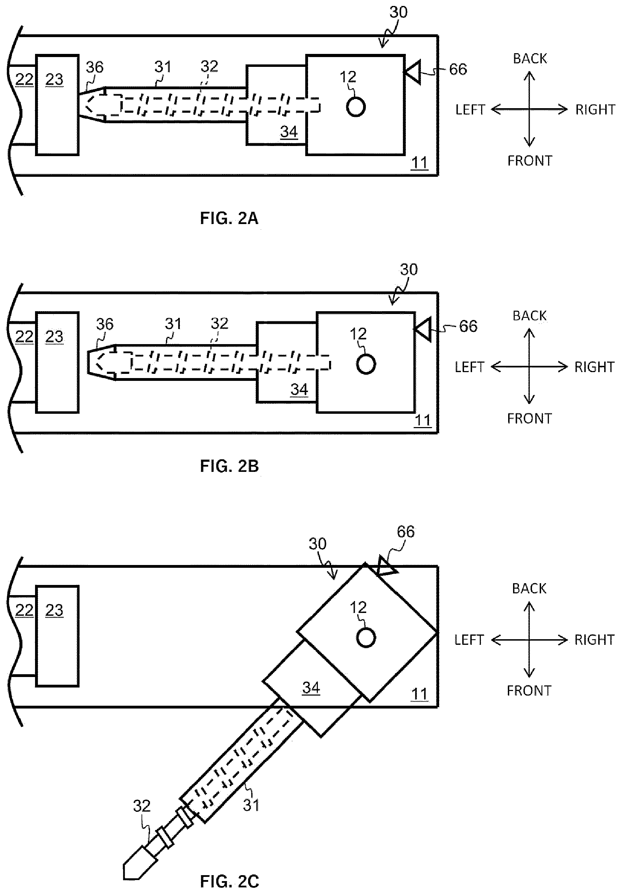

FIGs. 2A through 2C are diagrams illustrating orientations of the injection device 30. As illustrated in FIG. 1 and FIGs. 2A through 2C, the injection device 30 is supported by the base member 11 so as to be capable of pivoting on a pivot shaft 12 extending in a vertical direction. Then, the injection device 30 is configured to be capable of changing the orientation among a communication orientation illustrated in FIG. 2A, a separation orientation illustrated in FIG. 2B, and a pivot orientation illustrated in FIG. 2C.

The communication orientation is an orientation of the injection device 30 where the distal end (i.e., the nozzle 36) of the heating cylinder 31 communicates with the clamped mold 21. The communication orientation is also an orientation of the injection device 30 where the heating cylinder 31 extends in the direction coincident with the clamping device 20 and with the direction facing the injection device 30. The communication orientation is also an orientation of the injection device 30 where the screw 32 moves forward and backward in the heating cylinder 31 to plasticize, measure and inject the molding material. The communication orientation is further an orientation of the injection device 30 where the screw 32 is not allowed to be inserted into and removed from the heating cylinder 31.

The separation orientation is an orientation of the injection device 30 where the distal end (i.e., the nozzle 36) of the heating cylinder 31 is separated from the mold 21. The separation orientation is also an orientation of the injection device 30 where the heating cylinder 31 extends in the direction coincident with the clamping device 20 and with the direction facing the injection device 30. That is, the injection device 30 is configured to be capable of moving forward and backward (moving in parallel) to the mold 21 (i.e., the clamping device 20) between the communication orientation and the separation orientation. The separation orientation is further an orientation of the injection device 30 where the screw 32 is not allowed to be inserted into and removed from the heating cylinder 31.

The pivot orientation is an orientation pivoted on the pivot shaft 12 from the separation orientation. The pivot orientation is also an orientation of the injection device 30 where the heating cylinder 31 extends in a direction crossing the clamping device 20 and crossing the direction facing the injection device 30. That is, the injection device 30 is configured so as to be capable of pivoting on the pivot shaft 12 between the separation orientation and the pivot orientation. The pivot orientation is further an orientation of the injection device 30 where the screw 32 is allowed to be inserted into and removed from the heating cylinder 31. More specifically, the injection device 30 in the pivot orientation allows the nozzle 36 to be removed from the distal end of the heating cylinder 31, thereby allowing the screw 32 to be inserted into and removed from the heating cylinder 31.

That is, the injection device 30 pivots on the pivot shaft 12 in a first direction (counterclockwise in FIGs. 2A through 2C) to change the orientation from the separation orientation to the pivot orientation. The injection device 30 also pivots on the pivot shaft 12 in a second direction (clockwise in FIGs. 2A through 2C) to change the orientation from the pivot orientation to the separation orientation. The first direction and the second direction are the directions opposite to each other. Although FIG. 1 illustrates the pivot shaft 12 extending in the vertical direction, the direction where the pivot shaft 12 extends is not particularly limited.

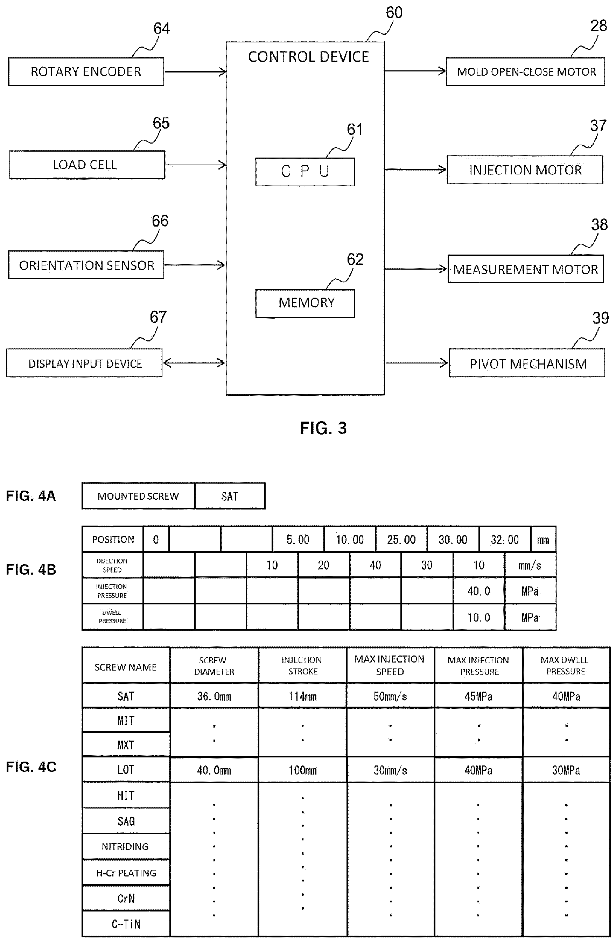

The injection device 30 is pivoted by a pivot mechanism 39 (refer to FIG. 3). As an example, the pivot mechanism 39 may be a stretchable hydraulic cylinder with an end connected to the base member 11 and with the other end connected to the injection device 30. As another example, the pivot mechanism 39 may be configured with an electric motor and a transmission mechanism to transmit the driving force of the electric motor to the injection device 30. It should be noted that the injection device 30 may use no pivot mechanism 39. That is, an operator may manually pivot the injection device 30.

### Configuration of Control Device 60

FIG. 3 is a hardware block diagram of the injection molding machine 10. The injection molding machine 10 is provided with a control device 60. As illustrated in FIG. 3, the control device 60 is provided with a central processing unit (CPU) 61 and a memory 62. The memory 62 is configured with, for example, a read only memory (ROM), a random access memory (RAM), a hard disk drive (HDD), or a combination of them. The control device 60 achieves processes described later by the CPU 61 reading and executing the program codes stored in the ROM or the HDD. The RAM is used as a work area for the CPU 61 to execute the programs.

It should be noted that the specific configuration of the control device 60 is not limited to this and may be achieved by hardware, such as an application specific integrated circuit (ASIC) and a field-programmable gate array (FPGA).

The control device 60 controls the entire operation of the injection molding machine 10. More specifically, the control device 60 controls the mold open-close motor 28, the injection motor 37, the measurement motor 38, and the pivot mechanism 39 based on various signals output from a rotary encoder 64, a load cell 65 (pressure sensor), and an orientation sensor 66.

The mold open-close motor 28, the injection motor 37, and the measurement motor 38 are, for example, servomotors to generate a driving force of opening and closing the mold 21, a driving force of moving the screw 32 forward and backward, and a driving force of rotating the screw 32 in accordance with control by a servo amplifier, not shown.

The rotary encoder 64 is a sensor to detect the speed and the distal end position of the screw 32. More specifically, the rotary encoder 64 outputs a pulse signal in accordance with the rotation of the injection motor 37 to the control device 60. Then, the control device 60 specifies the speed of the screw 32 by the number of pulse signals output per unit time. In addition, the control device 60 specifies the distal end position of the screw 32 by the accumulated value of the pulse signals.

The load cell 65 is a sensor to detect a pressure applied to the screw 32. More specifically, the load cell 65 outputs a pressure signal (voltage value), in accordance with the pressure applied to the screw 32, to the control device 60. Then, the control device 60 specifies the pressure applied to the screw 32 based on the pressure signal output from the load cell 65.

The orientation sensor 66 is a sensor to detect the orientation of the injection device 30. More specifically, the orientation sensor 66 detects that the injection device 30 is in the pivot orientation. For example, the orientation sensor 66 stops output of an orientation signal when the injection device 30 is in the pivot orientation and outputs an orientation signal to the control device 60 when the injection device 30 is in an orientation different from the pivot orientation. The control device 60 then specifies the orientation of the injection device 30 based on the orientation signal output from the orientation sensor 66. It should be noted that the orientation sensor 66 may output an orientation signal when the injection device 30 is in the pivot orientation and stop the output of the orientation signal when the injection device 30 is in an orientation different from the pivot orientation.

In addition, the control device 60 is connected to a display input device 67. The display input device 67 is a user interface provided with a display (display device) to display various kinds of information to be notified to an operator and buttons, switches, dials, and the like (input devices) to accept input operations by an operator. In addition, the display input device 67 may be provided with a touchscreen superimposed on the display. The display input device 67 accepts an input operation by an operator and outputs an input signal corresponding to the accepted input operation to the control device 60.

### Data Examples Stored in Memory 62

FIGs. 4A through 4C illustrate data examples of a mounted screw (4A), injection conditions (4B), and a screw table (4C). The mounted screw, the injection conditions, and the screw table illustrated in FIGs. 4A through 4C are stored in the memory 62.

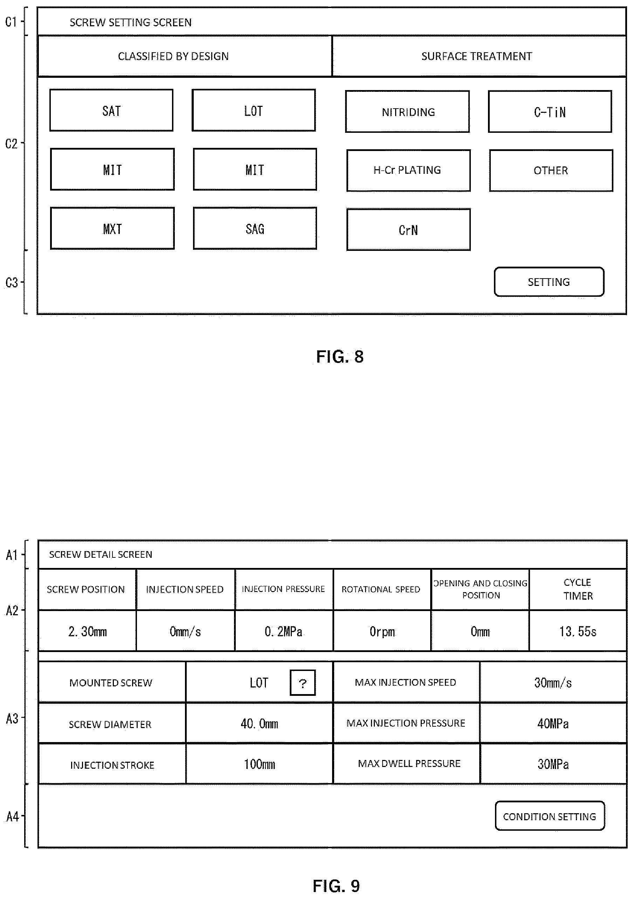

The mounted screw illustrated in FIG. 4A is data indicating the screw 32 inserted into the heating cylinder 31. The control device 60 causes the kind of screw 32set (input) by an operator through a screw setting screen illustrated in FIG. 8 to be stored in the memory 62.

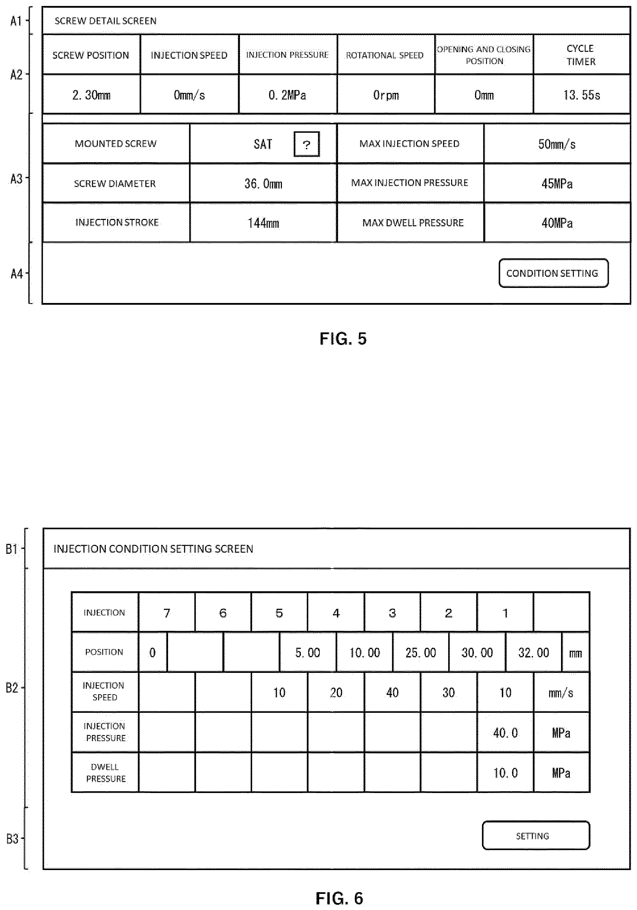

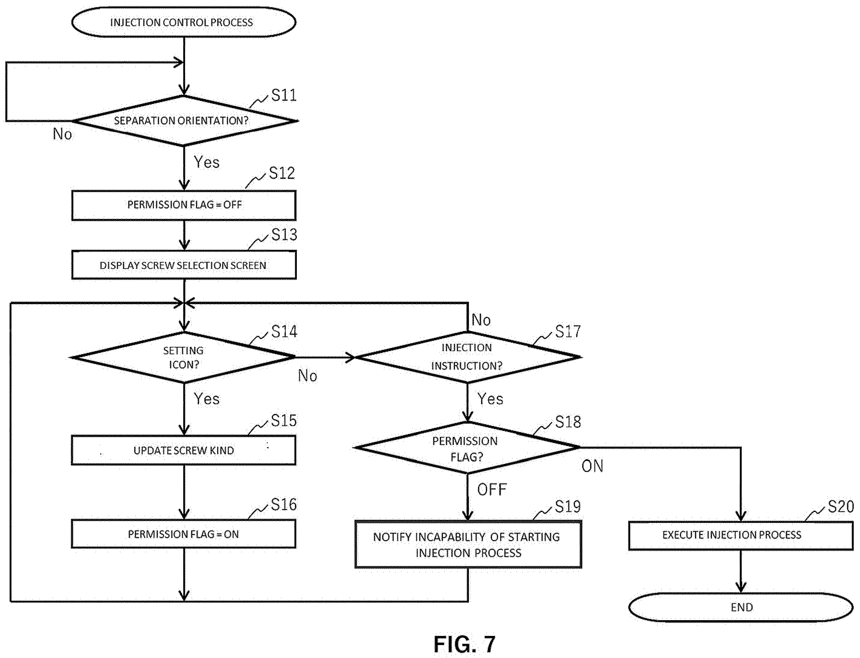

The injection conditions illustrated in FIG. 4B are operating conditions of the injection device 30 to inject the molding material. The control device 60 causes, for example, molding conditions set (input) by an operator through an injection condition setting screen illustrated in FIG. 6 to be stored in the memory 62. In addition, at step S20 in FIG. 7, the control device 60 causes the injection device 30 to operate in accordance with the molding conditions stored in the memory 62. The injection conditions according to the present embodiment include a plurality of parameters (e.g., position, injection speed, injection pressure, dwell pressure).

The parameter "position" indicates the position (mm) of the distal end of the screw 32 in the heating cylinder 31. More specifically, the parameter "position" indicates a position to switch the speed of the screw 32 during injection of the plasticized resin (hereinafter, referred to as an "injection process"). Note that the parameter "position" may include a plurality of switching positions. The position in the heating cylinder 31 may be expressed as the distance from the forward limit toward the basal end of the heating cylinder 31, indicating the forward limit as 0 mm. The position of the distal end of the screw 32 is detected by the rotary encoder 64.

The parameter "injection speed" indicates the speed (mm/s) of moving the screw 32 forward in the injection process. More specifically, the parameter "injection speed" may include a plurality of speeds switched in a plurality of switching positions indicated by the parameter "position". That is, the forward speed indicated by the parameter "injection speed" is the forward speed of the screw 32 between adjacent switching positions. The forward speed of the screw 32 is detected by the rotary encoder 64.

The parameter "injection pressure" indicates the maximum value (MPa) of the pressure applied to the screw 32 in the injection process. That is, speed control by the parameter "injection speed" is given priority in the injection process and, if reaching the pressure indicated by the parameter "injection pressure", the speed is controlled in such a manner that the injection speed becomes closer to the set value without exceeding the indicated pressure.

The parameter "dwell pressure" indicates the pressure (MPa) that the screw 32 applies to the plasticized resin injected into the mold 21. In other words, the parameter "dwell pressure" indicates the pressure that the screw 32 applies in the forward direction after finishing the plasticized resin injection. The parameter "dwell pressure" may include a plurality of pressures. The pressure applied to the screw 32 is detected by the load cell 65.

The screw table illustrated in FIG. 4C is a table to store specifications (e.g., diameter, stroke) of the screw 32 and respective limit values of the plurality of parameters included in the molding conditions in association with each kind (e.g., SAT, MIT, MXT, ...) of the screw 32 allowed to be inserted into the heating cylinder 31. Each limit value refers to at least one of the upper limit and the lower limit (the upper limit in the present embodiment) in the settable numerical range.

### Screw Detail Screen

FIG. 5 is an example of a screw detail screen. The screw detail screen is a screen to display the kind of screw 32 stored in the memory 62 (i.e., inserted into the heating cylinder 31). The control device 60 causes the screw detail screen illustrated in FIG. 5 to be displayed on the display input device 67 in accordance with the input operation to the display input device 67 by an operator. As illustrated in FIG. 5, the screw detail screen includes, for example, a title area A1, a measured value area A2, a screw area A3, and an icon area A4.

The title area A1 is an area to display the name of the screen. The measured value area A2 is an area to display values measured by the rotary encoder 64, the load cell 65, and the like. The measured values displayed in the measured value area A2 are not particularly limited, and in the present embodiment, the screw position, the injection speed, the injection pressure, the rotational speed, the opening and closing position, and the cycle timer are displayed.

The screw area A3 is an area to display information in association with the kind "SAT" of the screw 32 illustrated in FIG. 4A within the screw table illustrated in FIG. 4C. In addition, the [?] icon displayed adjacent to the kind "SAT" of the screw 32 is an icon to instruct display of details of the screw 32. For example, the control device 60 causes the display input device 67 to display details (e.g., compatible model, overview, detailed specifications) of the screw 32 inserted into the heating cylinder 31 if the [?] icon is tapped.

The icon area A4 is an area to display a [condition setting] icon as an icon to be operated by an operator through the display input device 67. If the [condition setting] icon is tapped, the control device 60 causes the display input device 67 to display the injection condition setting screen illustrated in FIG. 6 instead of the screw detail screen illustrated in FIG. 5.

### Injection Condition Setting Screen

FIG. 6 is an example of the injection condition setting screen. The injection condition setting screen is a screen to display the injection conditions stored in the memory 62 and also to cause an operator to edit the injection conditions through the display input device 67. The control device 60 causes the injection condition setting screen illustrated in FIG. 6 to be displayed on the display input device 67 in accordance with an input operation to the display input device 67 by the operator. As illustrated in FIG. 6, the injection condition setting screen includes, for example, a title area B1, a condition editing area B2, and an icon area B3.

The title area B1 is an area to display the name of the screen. The condition editing area B2 is an area to display the injection conditions illustrated in FIG. 4B and also to accept operations by an operator to change any of the injection conditions. The icon area B3 is an area to display a [setting] icon as an icon to be operated by an operator through the display input device 67. If the [condition setting] icon in the screw detail screen is tapped, the control device 60 causes the display input device 67 to display the injection condition setting screen illustrated in FIG. 6.

In the injection process in accordance with the injection conditions illustrated in FIG. 6, the control device 60 moves the screw 32 forward at 10 (mm/s) between 32.00 (mm) and 30.00 (mm), at 30 (mm/s) between 30.00 (mm) and 25.00 (mm), at 40 (mm/s) between 25.00 (mm) and 10.00 (mm), at 20 (mm/s) between 10.00 (mm) and 5.00 (mm), and at 10 (mm/s) between 5.00 (mm) and later. In addition, the control device 60 controls the speed in the injection process in such a manner that the injection speed becomes closer to the setting value without exceeding the maximum value (= 40 (MPa)) of the pressure applied to the screw 32. Moreover, the control device 60 applies 10.0 (MPa) to the plasticized resin in the mold 21.

In addition, in the case of accepting an operation by an operator to change any of the injection conditions displayed in the condition editing area B2 through the display input device 67, the control device 60 causes the injection conditions after the change to be displayed in the condition editing area B2. Moreover, if the [setting] icon is tapped, the control device 60 overwrites (i.e., updates) the injection conditions illustrated in FIG. 4B with the injection conditions displayed in the condition editing area B2 (i.e., the injection conditions after the change).

### Injection Control Process

FIG. 7 is a flowchart of an injection control process. FIG. 8 is a display example of the screw setting screen. The injection control process is a process of controlling the injection process to inject the molding material filled in the heating cylinder 31 into the cavity in the clamped mold 21. The control device 60 starts the injection control process illustrated in FIG. 7 in accordance with, for example, the injection device 30 being pivoted from the separation orientation to the pivot orientation (i.e., stopping output of the orientation signal).

Note that the memory 62 stores a permission flag. The permission flag is information indicating whether to permit operation of the injection device 30 (more specifically, execution of the injection process). What is set to the permission flag is a first value "ON" to permit execution of the injection process or a second value "OFF" to prohibit execution of the injection process.

At first, the control device 60 stands by for execution of the processes of steps S12 and later until the injection device 30 again returns to the separation orientation (i.e., restarting output of the orientation signal) (S11: No). Then, the control device 60 determines that the screw 32 in the heating cylinder 31 has been replaced in accordance with detection by the orientation sensor 66 that the injection device 30 pivots from the separation orientation to the pivot orientation and the injection device 30 again returns to the separation orientation (i.e., restarting output of the orientation signal) (S11: Yes).

In the injection molding machine 10, the injection device 30 is considered to be pivoted to the pivot orientation for replacing the screw 32 in the heating cylinder 31 or for cleaning inside the heating cylinder 31. Thus, even if the injection device 30 is pivoted to the pivot orientation, it does not have to mean that the screw 32 has been replaced. In addition, even if the old screw 32 has been removed from the heating cylinder 31, there is a possibility that the same kind of screw 32 is inserted. However, the control device 60 according to the present embodiment regards that the screw 32 has been replaced in accordance with pivoting of the injection device 30 to the pivot orientation.

Then, if determining that the screw 32 has been replaced (S11: Yes), the control device 60 sets the second value "OFF" to the permission flag (S12). That is, if determining that the screw 32 has been replaced, the control device 60 prohibits execution of the injection process until the first value "ON" is set to the permission flag (i.e., until the kind of screw 32 is input) at step S16 described later.

In addition, if determining that the screw 32 has been replaced (S11: Yes), the control device 60 causes the display input device 67 to display the screw setting screen illustrated in FIG. 8 (S13). The screw setting screen is an example of a screen prompting input of the kind of screw 32 inserted into the heating cylinder 31. As illustrated in FIG. 8, the screw setting screen includes, for example, a title area C1, a screw selection area C2, and an icon area C3.

The title area C1 is an area to display the name of the screen. The screw selection area C2 is an area to display a plurality of screw icons (e.g., [SAT], [MIT], [MXT], ...) corresponding to the kinds of screw 32 allowed to be inserted into the heating cylinder 31. The icon area C3 is an area to display a [setting] icon as an icon to be operated by an operator through the display input device 67.

In the case of accepting the operation of tapping the screw icon corresponding to the kind of screw 32 actually inserted into the heating cylinder 31 (i.e., inputting the kind of screw 32) and tapping the [setting] icon through the display input device 67 (S14: Yes), the control device 60 overwrites (updates) the mounted screw illustrated in FIG. 4A with the input kind of screw 32 (S15). The control device 60 also sets the first value "ON" to the permission flag (S16). That is, if the kind of screw 32 is input through the display input device 67, the control device 60 stores the input kind of screw 32 in the memory 62 and also permits injection of the molding material.

The control device 60 is also capable of accepting an operation by an operator to instruct execution of the injection process (hereinafter, referred to as an "injection instruction") through the display input device 67 at an arbitrary timing (S17). Then, in the case of accepting the injection instruction through the display input device 67 (S17: Yes), the control device 60 determines the setting value of the permission flag (S18).

Then, if the second value "OFF" is set to the permission flag (i.e., the kind of screw 32 is not yet input) (S18: OFF), the control device 60 does not execute the injection process and notifies through the display input device 67 that the injection process cannot be started (S19). Meanwhile, if the first value "ON" is set to the permission flag (i.e., the kind of screw 32 is already input) (S18: ON), the control device 60 causes the injection device 30 to execute the injection process in accordance with the injection conditions stored in the memory 62 (S20).

### Various Screens after Replacement of Screw 32

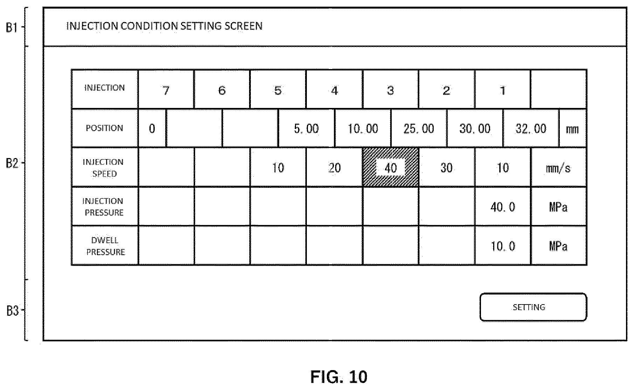

FIG. 9 is another example of the screw detail screen. FIG. 10 is another example of the injection condition setting screen. More specifically, FIGs. 9 and 10 illustrate the screw detail screen and the injection condition setting screen in the case of changing the kind of screw 32 from "SAT" to "LOT".

As illustrated in FIG. 9, the control device 60 causes each value corresponding to the screw name "LOT" in FIG. 4C to be displayed in the screw area A3 of the screw detail screen illustrated in FIG. 9 in accordance with the change of the mounted screw illustrated in FIG. 4A from "SAT" to "LOT". That is, every time the screw 32 in the heating cylinder 31 is replaced, the kind, the specifications, and the limit values of the screw 32 inserted into the heating cylinder 31 are updated in the screw detail screen.

In addition, the control device 60 compares the limit values corresponding to the kind of screw 32 with the molding conditions stored in the memory 62 when the injection condition setting screen is displayed. Then, in the condition editing area B2 of the injection condition setting screen illustrated in FIG. 10, the control device 60 causes any parameter not exceeding the corresponding limit value and any parameter exceeding the corresponding limit value (e.g., the injection speed = 40), among the plurality of parameters included in the injection conditions, to be displayed in different modes. Although the parameter exceeding the limit value is highlighted in the example of FIG. 10, the manner of differentiating the display mode is not particularly limited and may be changing the color, blinking, and the like.

The highlighted parameter in FIG. 10 exceeds the range allowed to be set for the screw 32 inserted into the heating cylinder 31. That is, the current screw 32 is not capable of executing the injection process in accordance with the current molding conditions. Thus, if determining that the current molding conditions exceed any of the limit values corresponding to the kind of screw 32, the control device 60 causes a call for a change in the molding conditions to be notified.

### Action and Effects in this Embodiment

According to the above embodiment, determining replacement of the screw 32 by pivoting of the injection device 30 allows appropriate determination of the replacement of the screw 32 by a simple method compared with the method of PTL 1.

Note that the kind of screw 32 in many of injection molding machines 10 in the past has to be checked by looking at an engraved mark on the body of the screw 32. In contrast, the above embodiment allows the kind of screw 32 to be checked at an arbitrary timing through the screw detail screen. However, even if the screw 32 is replaced, it is not possible to notify an operator of correct information without changing the setting values of the mounted screw. Thus, execution of the injection process is prohibited until the new kind of screw 32 is input through the screw setting screen to resolve the defect that the kind of screw 32 stored in the memory 62 does not coincide with the kind of screw 32 actually inserted into the heating cylinder 31.

In addition, if the injection device 30 is pivoted to the pivot orientation, the method in the above embodiment determines that the screw 32 has been replaced regardless of whether the screw 32 has been actually replaced. Thus, even if the kind of screw 32 does not have to be changed, the kind of screw 32 sometimes has to be selected through the screw setting screen. However, such a method allows a defect to be resolved in which the operator forgets the operations of changing the kind of screw 32 and the kind of the screw 32 stored in the memory 62 does not coincide with the kind of screw 32 actually inserted into the heating cylinder 31.

In addition, according to the above embodiment, if the screw 32 is determined to have been replaced, execution of the injection process is prohibited until the kind of screw 32 is input through the screw setting screen, thereby preventing execution of the injection process under the injection conditions not compatible with the newly inserted screw 32.

In addition, according to the above embodiment, if the screw 32 is determined to have been replaced, the display input device 67 is caused to display the screw setting screen, thereby prompting input of the new kind of screw 32. It should be noted that an operation of the display input device 67 by an operator may cause the screw setting screen to be displayed.

In addition, according to the above embodiment, displaying the mounted screw on the screw detail screen allows the operator to check the kind of screw 32 inserted into the heating cylinder 31 at an arbitrary timing. Moreover, in addition to the kind of screw 32, the specifications and the limit values of the screw 32 are caused to be displayed on the screw detail screen, thereby allowing the operator to obtain hints for appropriately updating the molding conditions.

Still in addition, according to the above embodiment, in the injection condition setting screen, any parameter exceeding the corresponding limit value (e.g., the injection speed = 40) is displayed in a different mode from the other parameters among the plurality of parameters included in the molding conditions. This allows the operator to recognize any of the parameters that has to be changed with replacement of the screw 32.

The embodiments described above are merely explanatory examples of the present invention which is defined in the appended claims.

## Claims

1. A **molding machine** (10) comprising: an injection device (30) configured to inject a molding material into a cavity in a clamped mold (21); and a control device (60) configured to control the injection device (30), wherein
the injection device (30)
includes a heating cylinder (31) to be filled with the molding material and a screw (32) to move forward and backward inside the heating cylinder (31) and also to inject the molding material filled in the heating cylinder (31), and is configured to be capable of moving forward and backward to the mold (21) between a communication orientation where a distal end of the heating cylinder (31) communicates with the clamped mold (21) and a separation orientation where the distal end of the heating cylinder (31) is separated from the mold (21), and to be capable of pivoting on a pivot shaft (12) between the separation orientation not allowing insertion and removal of the screw (32) and a pivot orientation allowing insertion and removal of the screw (32),
**characterized in that** the molding machine further includes a sensor (66) to detect an orientation of the injection device (30), and
the control device (60) determines that the screw (32) in the heating cylinder (31) has been replaced in accordance with detection by the sensor (66) that the injection device (30) pivots from the separation orientation to the pivot orientation and again returns to the separation orientation.

2. The molding machine according to Claim 1, further comprising an input device configured to accept an input operation by an operator, wherein
the control device
prohibits, if determining that the screw has been replaced, injection of the molding material until kind of the screw inserted into the heating cylinder is input through the input device and
permits, if the kind of the screw is input through the input device, storage of the input kind of the screw in a memory and injection of the molding material.

3. The molding machine according to Claim 2, further comprising a display device configured to display information, wherein
the control device causes, if determining that the screw has been replaced, a screen prompting input of the kind of the screw through the input device to be displayed on the display device.

4. The molding machine according to Claim 2, further comprising a display device configured to display information, wherein
the control device causes the kind of the screw stored in the memory to be displayed on the display device in accordance with an instruction by the operator through the input device.

5. The molding machine according to Claim 2, wherein
the memory stores
a molding condition input through the input device and
a limit value of the molding condition in association with the kind of each screw allowed to be inserted into the heating cylinder, and
the control device causes, if determining that the molding condition stored in the memory exceeds the limit value corresponding to the kind of the screw stored in the memory, a call for a change in the molding condition to be notified.

## Patentansprüche

1. Formmaschine (10), die Folgendes umfasst: eine Einspritzvorrichtung (30), die konfiguriert ist, ein Formmaterial in einen Hohlraum in einer geklemmten Form (21) einzuspritzen; und eine Steuervorrichtung (60), die konfiguriert ist, die Einspritzvorrichtung (30) zu steuern, wobei die Einspritzvorrichtung (30) einen Heizzylinder (31), der mit dem Formmaterial zu füllen ist, und eine Schnecke (32), um sich innerhalb des Heizzylinders (31) vorwärts und rückwärts zu bewegen und außerdem das in den Heizzylinder (31) eingefüllte Formmaterial einzuspritzen, enthält und konfiguriert ist, sich zwischen einer Kommunikationsorientierung, in der ein distales Ende des Heizzylinders (31) mit der geklemmten Form (21) in Verbindung steht, und einer Trennorientierung, in der das distale Ende des Heizzylinders (31) von der Form (21) getrennt ist, vorwärts und rückwärts zu der Form (21) bewegen zu können und auf einer Schwenkachse (12) zwischen der Trennungsorientierung, die ein Einführen und Entfernen der Schnecke (32) nicht erlaubt, und einer Schwenkorientierung, die ein Einführen und Entfernen der Schnecke (32) erlaubt, schwenken zu können,
**dadurch gekennzeichnet, dass** die Formmaschine ferner einen Sensor (66) enthält, um eine Orientierung der Einspritzvorrichtung (30) zu detektieren, und die Steuervorrichtung (60) gemäß einer Detektion durch den Sensor (66), dass die Einspritzvorrichtung (30) von der Trennungsorientierung in die Schwenkorientierung schwenkt und wieder in die Trennungsorientierung zurückkehrt, bestimmt, dass die Schnecke (32) in dem Heizzylinder (31) ersetzt worden ist.

2. Formmaschine nach Anspruch 1, die ferner eine Eingabevorrichtung umfasst, die konfiguriert ist, eine Eingabeoperation durch eine Bedienungsperson anzunehmen, wobei
die Steuervorrichtung,
dann, wenn bestimmt wird, dass die Schnecke ersetzt worden ist, das Einspritzen des Formmaterials verhindert, bis eine Art der in den Heizzylinder eingesetzten Schnecke über die Eingabevorrichtung eingegeben wird, und,
dann, wenn die Art der Schnecke durch die Eingabevorrichtung eingegeben wird, die Speicherung der eingegebenen Art der Schnecke in einem Speicher und das Einspritzen des Formmaterials ermöglicht.

3. Formmaschine nach Anspruch 2, die ferner eine Anzeigevorrichtung umfasst, die konfiguriert ist, Informationen anzuzeigen, wobei
die Steuervorrichtung bewirkt, dass dann, wenn bestimmt wird, dass die Schnecke ersetzt worden ist, ein Schirm, der auffordert, die Art der Schnecke über die Eingabevorrichtung einzugeben, auf der Anzeigevorrichtung angezeigt wird.

4. Formmaschine nach Anspruch 2, die ferner eine Anzeigevorrichtung umfasst, die konfiguriert ist, Informationen anzuzeigen, wobei
die Steuervorrichtung bewirkt, dass die Art der Schnecke, die in dem Speicher gespeichert ist, gemäß einer Anweisung durch die Bedienungsperson über die Eingabevorrichtung auf der Anzeigevorrichtung angezeigt wird.

5. Formmaschine nach Anspruch 2, wobei der Speicher
eine Formbedingung, die über die Eingabevorrichtung eingegeben wird, und
einen Grenzwert der Formbedingung in Verbindung mit der Art jeder Schnecke, die in den Heizzylinder eingeführt werden darf, speichert und
die Steuervorrichtung bewirkt, dass dann, wenn bestimmt wird, dass die im Speicher gespeicherte Formbedingung den Grenzwert übersteigt, der der Art der Schnecke, die im Speicher gespeichert ist, entspricht, ein Bedarf an einer Änderung der Formbedingung gemeldet wird.

## Revendications

1. Machine de moulage (10), comprenant : un dispositif d'injection (30) configuré pour injecter un matériau de moulage dans une cavité dans un moule serré (21) ; et un dispositif de commande (60) configuré pour commander le dispositif d'injection (30), dans laquelle le dispositif d'injection (30) inclut un pot de chauffage (31) destiné à être rempli avec le matériau de moulage et une vis (32) destinée à se mouvoir vers l'avant et vers l'arrière à l'intérieur du pot de chauffage (31) et également à injecter le matériau de moulage rempli dans le pot de chauffage (31), et est configuré pour être capable de se mouvoir vers l'avant et vers l'arrière jusqu'au moule (21) entre une orientation de communication où une extrémité distale du pot de chauffage (31) communique avec le moule serré (21) et une orientation de séparation où l'extrémité distale du pot de chauffage (31) est séparée du moule (21), et pour être capable de pivoter sur un arbre de pivotement (12) entre l'orientation de séparation ne permettant pas l'insertion et l'enlèvement de la vis (32) et une orientation de pivotement permettant l'insertion et l'enlèvement de la vis (32), **caractérisée en ce que** la machine de moulage inclut en outre un capteur (66) pour détecter une orientation du dispositif d'injection (30), et le dispositif de commande (60) détermine que la vis (32) dans le pot de chauffage (31) a été remplacée conformément à la détection, par le capteur (66), que le dispositif d'injection (30) pivote depuis l'orientation de séparation jusqu'à l'orientation de pivotement et retourne à nouveau à l'orientation de séparation.

2. Machine de moulage selon la revendication 1, comprenant en outre un dispositif d'entrée configuré pour accepter une opération d'entrée par un opérateur, dans laquelle
le dispositif de commande
empêche, s'il est déterminé que la vis a été remplacée, l'injection du matériau de moulage jusqu'à ce qu'un type de la vis insérée dans le pot de chauffage soit entré par le biais du dispositif d'entrée et
permet, si le type de la vis est entré par l'intermédiaire du dispositif d'entrée, le stockage du type entré de la vis dans une mémoire, et l'injection du matériau de moulage.

3. Machine de moulage selon la revendication 2, comprenant en outre un dispositif d'affichage configuré pour afficher des informations, dans laquelle le dispositif de commande amène, s'il est déterminé que la vis a été remplacée, un écran incitant l'entrée du type de la vis par le biais du dispositif d'entrée à être affiché sur le dispositif d'affichage.

4. Machine de moulage selon la revendication 2, comprenant en outre un dispositif d'affichage configuré pour afficher des informations, dans laquelle le dispositif de commande amène le type de la vis stocké dans la mémoire à être affiché sur le dispositif d'affichage conformément à une instruction par l'opérateur par le biais du dispositif d'entrée.

5. Machine de moulage selon la revendication 2, dans laquelle
la mémoire stocke
une condition de moulage entrée par le biais du dispositif d'entrée, et
une valeur de limite de la condition de moulage en association avec le type de chaque vis permise d'être insérée dans le pot de chauffage, et
le dispositif de commande amène, s'il est déterminé que la condition de moulage stockée dans la mémoire dépasse la valeur de limite correspondant au type de la vis stocké dans la mémoire, une demande en ce qui concerne un changement de la condition de moulage à être signalée.
